## Europäisches Patentamt
## European Patent Office
## Office européen des brevets

(11) Numéro de publication: **0 102 880**
**B1**

(12) **FASCICULE DE BREVET EUROPEEN**

(45) Date de publication du fascicule du brevet:
**29.10.86**

(21) Numéro de dépôt: **83401577.8**

(22) Date de dépôt: **29.07.83**

(51) Int. Cl.⁴: $G\ 01\ N\ 27/56$

(54) Dispositif électrochimique de mesure de la pression partielle en oxygène dans une atmosphère gazeuse ou liquide.

(30) Priorité: **02.08.82 FR 8213473**

(43) Date de publication de la demande:
**14.03.84 Bulletin 84/11**

(45) Mention de la délivrance du brevet:
**29.10.86 Bulletin 86/44**

(84) Etats contractants désignés:
**DE GB NL**

(56) Documents cités:
**FR - A - 2 058 746**
**FR - A - 2 330 127**
**GB - A - 1 474 246**
**GB - A - 2 079 469**
**US - A - 4 078 981**
**US - A - 4 210 509**

(73) Titulaire: **SOCIETE NATIONALE ELF AQUITAINE, Tour Aquitaine, F-92400 Courbevoie (FR)**

(72) Inventeur: **Siebert, Elisabeth, 22 rue de Turenne, F-38100 Grenoble (FR)**
Inventeur: **Fouletier, Jaques, 2 rue Auguste Ravier, F-38100 Grenoble (FR)**
Inventeur: **Viiminot, Serge, Chemin de Missargues Saint Génies de Mourgues, F-34160 Castries (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

## Description

La présente invention concerne un dispositif électrochimique de mesure de la pression partielle en oxygène dans une atmosphère gazeuse ou liquide, que l'on peut appeler aussi jauge électrochimique à oxygène.

Il est connu de réaliser de telles jauges à oxygène en associant à une couche d'électrolyte solide, une électrode de référence et une électrode de travail.

Selon les dispositifs de l'art antérieur, l'électrolyte solide peut être un oxyde. Dans un tel électrolyte, les ions $O^=$ assurent la conduction ionique et sont mis en jeu dans les réactions d'électrode. Une telle jauge est par exemple décrite dans la demande de brevet FR-A 2 243 625 qui prévoit, comme électrolyte, une solution solide de zircone et d'oxyde d'yttrium, une solution solide à base de thorine. Cependant l'utilisation de ces jauges est limitée à des températures relativement élevées, par exemple supérieures à 400°C par le fait que ces oxydes sont très peu conducteurs à basse température.

On a d'autre part proposé de remédier à ces inconvénients en proposant des électrolytes dans lesquels la conductivité ionique est assurée par des ions autres que l'oxygène, par exemple par des halogénures. C'est ainsi que PELLOUX et al., Solid State Ionics 1, 1980, 343, ont proposé un électrolyte constitué par du $SrCl_2$ dopé par du KCl et contenant une faible quantité de SrO. Dans la demande de brevet français n° 2 486 244 «Dispositif potentiométrique utilisable comme capteur pour déterminer la pression d'un gaz» on a proposé d'utiliser un fluorure mixte du type $PbSnF_4$, dans lequel les ions fluorures assurent la conductivité. Si ces électrolytes permettent de réaliser des jauges à oxygène performantes, ils présentent cependant l'inconvénient de fournir des temps de réponse relativement long, le temps de réponse de la jauge étant défini comme le temps nécessaire pour que le f.e.m. de la jauge redevienne sensiblement égale à la f.e.m. théorique après une modification de la pression d'oxygène. Un tel inconvénient est pénalisant pour les utilisations où l'on veut détecter rapidement une variation de la teneur en oxygène.

La présente invention prévoit un dispositif qui permet de pallier les inconvénients de l'art antérieur et qui, en particulier, présente un temps de réponse relativement court tout en étant utilisable à des températures basses, en particulier inférieures à 200°C.

Pour cela, l'invention concerne un dispositif électrochimique pour la mesure de la pression partielle en oxygène dans une atmosphère gazeuse ou liquide comprenant une électrode de travail sensible à l'oxygène, un électrolyte solide constitué au moins en partie, par un halogénure mixte susceptible d'assurer la conduction ionique par les ions halogénures, une électrode de référence constituée par un gaz ou un solide ou un mélange de solides, ladite électrode de référence étant capable, au moins dans sa proximité immédiate, de maintenir constant le potentiel chimique de l'halogène de l'électrolyte, ce dispositif étant caractérisé en ce que l'électrolyte est dopé par un peroxyde qui fournit l'espèce réactive de l'électrode de travail.

L'intérêt de ce dopage réside dans le fait que pour une telle jauge à oxygène, ce sont les ions peroxydes qui sont mis en jeu dans la réaction d'électrode ce qui permet d'en améliorer la reversibilité et de diminuer le temps de réponse de la jauge.

En outre, un tel électrolyte présente une bonne conductivité à température ordinaire et une conductivité électronique nulle.

Selon une caractéristique complémentaire de l'invention, l'électrolyte est choisi parmi les halogénures mixtes bons conducteurs et qui présentent des sites susceptibles d'accueillir des ions peroxyde sans décomposition.

De préférence, l'halogénure est un fluorure mixte de plomb et d'étain de formule $PbSnF_4$.

Selon une autre caractéristique complémentaire, l'électrolyte est constitué par $PbSnF_4$ dans lequel le peroxide est présent à raison de 0,2 à 3% (pourcentage atomique par rapport au fluorure), de référence 0,5% ou 2%.

L'électrode de préférence peut être constituée, au moins en partie, par un mélange d'un métal et de son halogénure correspondant à l'halogène de l'électrolyte, le métal étant choisi parmi l'étain, le plomb, le bismuth et l'argent.

Comme électrode de travail, un peut utiliser une électrode poreuse constituée par un métal inerte tel que, par exemple, le platine et l'argent. Cette électrode peut alors être obtenue par dépôt d'une couche de laque métallique sur l'électrolyte.

Selon un autre mode de réalisation, l'électrode de travail est constituée par un oxyde conducteur électronique, et elle est de préférence obtenue par oxydation à l'air du chlorure correspondant. On peut aussi réaliser une pastille à l'aide d'une poudre dudit oxyde pressée au contact de l'électrolyte. De préférence, l'oxyde conducteur électronique est le dioxyde de ruthenium.

L'invention sera mieux comprise à la lecture de la description suivante d'un mode de réalisation préférée, faite en référence aux dessins annexés, cette description constituant une illustration de l'invention mais ne pouvant en aucun cas en être considéré comme une limitation. Sur les dessins:

– la figure 1 représente, en coupe, une jauge à oxygène selon un mode de réalisation de l'invention,

– la figure 2 représente, en coupe, une installation permettant de mettre en œuvre la jauge représentée figure 1.

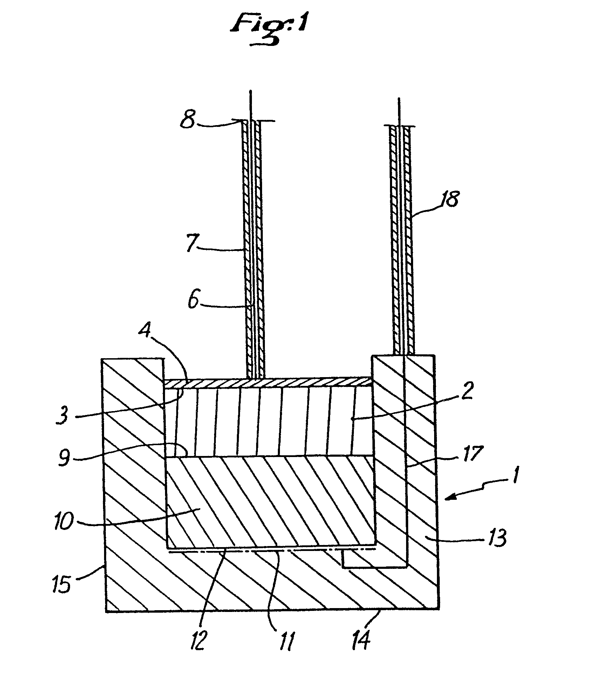

Sur la figure 1, on a représenté en (1) une jauge à oxygène comportant une pastille (2) d'électrolyte solide. L'électrolyte solide est constitué par un fluorure mixte de plomb et d'étain dopé par du peroxyde de baryum, à raison de 0,5% de peroxyde par rapport au fluorure (pourcentage atomique). Ce dopage a été obtenu par dissolution du peroxyde de baryum dans un mélange de poudres de fluorure d'étain et de fluorure de plomb.

Pour effectuer cette dissolution, on fond le mélange de poudres dans un tube scellé sous un vide de $10^{-2}$ Pa et on maintient à une température de 250°C pendant deux heures.

Le pourcentage de 0,5% de peroxyde a été choisi de façon que les ions peroxyde soient stables, sachant que lors du dopage, les ions baryum se placent sur des sites de plomb.

La pastille d'électrolyte (2) est en contact par sa face inférieure (9) avec l'électrode (10) de référence constituée par un mélange pressé de poudres d'étain et de fluorure d'étain. Une grille collectrice de courant en platine (11) est disposée sous la face (12) de l'électrode (10) opposée à la face en contact avec la face (9) de l'électrolyte.

Sur sa face supérieure (3), l'électrolyte est en contact avec l'électrode de travail (4) qui est constituée par un disque poreux de dioxyde de ruthenium auquel est relié un fil conducteur (6) entouré d'une gaine protectrice (7) et dont l'extrémité (8) est reliée à un millivoltmètre électronique à impédance d'entrée élevée. L'électrode de travail a été obtenue par réalisation d'une pastille de poudre de $RuO_2$ pressée simultanément avec l'électrolyte et le mélange de l'électrode de référence pour constituer une seule pastille. On obtient ainsi un ensemble permettant d'avoir de très bonnes réactions d'échange entre d'une part, l'électrolyte et l'électrode de référence et d'autre part, l'électrolyte et l'électrode de travail.

L'ensemble est disposé dans un boîtier (13) comportant un fond (14) et une paroi cylindrique (15). Ce boîtier est réalisé en une résine étanche et est ouvert sur sa partie supérieure.

L'ensemble constitué par le boîtier (13) et l'électrolyte (2) est parfaitement étanche de sorte que l'électrode de référence n'a aucun contact avec l'ambiance dans laquelle est placée l'électrode de travail.

La grille collectrice de courant (11) est reliée, par un fil conducteur (17) en platine entouré d'une gaine (18) au même millivoltmètre que le fil conducteur (6).

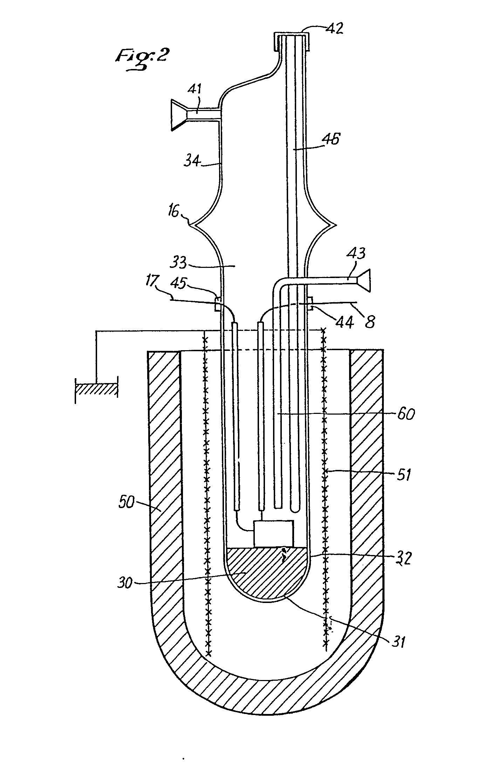

La figure 2 représente un dispositif permettant plus particulièrement l'étude des performances de la jauge à oxygène représentée figure 1.

La jauge (1) est placée sur un support (30) dont la face (31) est sphérique. Le support (30) est en alumine.

L'ensemble est placé dans la partie inférieure, sphérique (32) d'une enceinte (33) fabriquée en verre PYREX. L'enceinte (33) comporte une partie supérieure (34).

La partie supérieure (34) et la partie inférieure (32) sont réunies entre elles par un rodage cylindrique étanche (16). La partie supérieure (34) comporte une tubulure de sortie (41) et un orifice (42) constituant tous les deux des passages étanches. La partie inférieure (33) comporte, de la même façon une tubulure d'entrée (43) et deux passages (44) et (45) permettant la sortie des fils conducteurs (8) et (17). La tubulure (43) est prolongée à l'intérieur de l'enceinte par un tube en alumine (60) dont l'extrémité inférieure débouche au-dessus de l'électrode de travail.

Une jauge de température (46) est placée à l'intérieur de l'enceinte et son extrémité supérieure traverse d'une manière étanche la partie supérieure par l'orifice (42). La jauge de température est constituée par une sonde de platine. Un four (50) entoure l'enceinte (32) dans sa partie inférieure et une armature métallique de blindage (51) est placée entre l'enceinte et le four.

Le dispositif ci-dessus a été utilisé pour tester la jauge à oxygène représentée figure 1. Cette jauge peut être représentée par la chaîne électrochimique suivante: Pt, Sn–$SnF_2$/$PbSnF_4$ – $BaO_2$ (0,5%)/$RuO_2$ (poudre), $O_2$ ($PO_2$). On a mesuré la variation de la f.e.m. de la jauge avec le logarithme de la pression partielle d'oxygène à l'intérieur de l'enceinte et on a constaté pour la variation linéaire de la f.e.m. en fonction de $P(O_2)$ était vérifiée conformément à la loi théorique de NERNST et que la pente de la droite correspondait à un degré d'oxydation de l'oxygène égal à (–1) ce qui confirme bien que en dopant l'électrolyte avec du peroxyde, on a fournit l'espèce réactive de l'électrode. Cette mesure a été effectuée à 160°C.

On a d'autre part vérifié, pour cette température, que la jauge selon l'invention présentait un temps de réponse amélioré par rapport aux jauges non dopées puisque l'on a trouvé que, après une variation de pression partielle de 1013,25 Pa ($10^{-2}$ atm.) à 20 265 Pa (0,2 atmosphère), le temps de réponse est de 6 minutes alors qu'il est supérieur à 10 heures lorsque l'électrolyte n'est pas dopé. L'invention n'est pas limitée aux modes de réalisation décrites, elle en englobe au contraire toutes les variantes.

## Revendications

1. Dispositif électrochimique pour la mesure de la pression partielle en oxygène dans une atmosphère gazeuse ou liquide, ledit dispositif comprenant une électrode de travail (4) sensible à l'oxygène, un électrolyte solide (2) constitué au moins en partie par un halogénure mixte susceptible d'assurer la conduction ionique par les ions halogénure, une électrode de référence (10) constitué par un gaz ou un solide ou un mélange de solides, ladite électrode de référence étant capable, au moins dans sa proximité immédiate, de maintenir constant le potentiel chimique de l'halogène de l'électrolyte, caractérisé en ce que l'électrolyte est dopé par un peroxyde qui fournit l'espèce réactive de l'électrode de travail (4).

2. Dispositif selon la revendication 1, caractérisé en ce que l'halogénure est un fluorure mixte de plomb et d'étain.

3. Dispositif selon la revendication 2, caractérisé en ce que le peroxyde est présent dans l'électrolyte (2) à raison de 0,2 à 3% en pourcentage atomique par rapport au fluorure.

4. Dispositif selon la revendication 2, caractérisé en ce que le peroxyde est présent dans l'électrolyte (2) à raison de 0,5% en pourcentage atomique par rapport au fluorure.

5. Dispositif selon la revendication 1, caractérisé en ce que l'électrode de référence (10) est constituée, au moins en partie, par un mélange d'un métal et de son halogénure correspondant à celui de l'électrolyte (2), le métal étant choisi parmi l'étain, le plomb, le bismuth et l'argent.

6. Dispositif selon la revendication 1, caractérisé en ce que l'électrode de travail (4) est constituée par un oxyde conducteur électronique, en particulier l'oxyde de ruthenium.

7. Dispositif selon la revendication 4, caractérisé en ce que l'électrolyte (2), l'électrode de référence (10) et l'électrode de travail (4) sont constitués sous forme de pastilles qui sont pressées conjointement pour former une seule pastille.

## Patentansprüche

1. Elektrochemische Vorrichtung zur Messung des Sauerstoffpartialdrucks in einer gasförmigen oder flüssigen Umgebung, mit einer sauerstoffempfindlichen Arbeitselektrode (4), einem festen Elektrolyten (2) aus zumindest teilweise einem gemischten Halogenid zur Aufrechterhaltung der Ionenleitfähigkeit durch die Halogenionen, einer Bezugselektrode (10) aus einem Gas, einem Feststoff oder Feststoffgemisch, die zumindest in ihrer unmittelbaren Umgebung das chemische Halogenpotential des Elektrolyten konstant halten kann, gekennzeichnet durch die Dotierung des Elektrolyten mit einem Peroxid, das die reaktive Form der Arbeitselektrode (4) zur Verfügung stellt.

2. Vorrichtung nach Anspruch 1, gekennzeichnet durch ein gemischtes Blei-Zinnfluorid als Halogenid.

3. Vorrichtung nach Anspruch 2, gekennzeichnet durch die Anwesenheit des Peroxids im Elektrolyten (2) in einer Menge von 0,2 bis 3 Atomprozent, bezogen auf das Fluor.

4. Vorrichtung nach Anspruch 2, gekennzeichnet durch die Anwesenheit des Peroxids im Elektrolyten (2) in einer Menge von 0,5 Atomprozent, bezogen auf das Fluor.

5. Vorrichtung nach Anspruch 1, gekennzeichnet durch die Bezugselektrode (10) aus zumindest teilweise einem dem Elektrolyten (2) entsprechenden Gemisch eines Metalls und seines Halogenids, wobei das Metall unter Zinn, Blei, Wismut und Silber ausgewählt wird.

6. Vorrichtung nach Anspruch 1, gekennzeichnet durch eine Arbeitselektrode (4) aus einem elektronenleitfähigen Oxid und insbesondere Rutheniumoxid.

7. Vorrichtung nach Anspruch 4, gekennzeichnet durch einen Elektrolyten (2), eine Bezugselektrode (10) und eine Arbeitselektrode (4) in Form von Tabletten, die zu einer einzigen Tablette zusammengepresst sind.

## Claims

1. Electrochemical device for measuring the partial pressure of oxygen in a gaseous or liquid medium, the said device comprising a working electrode (4) sensitive to oxygen, a solid electrolyte (2) the composition of which includes a mixed halide, capable of assuring ionic conduction by the halide ions, a reference electrode (10) comprising a gas or a solid, or a mixture of solids, the said reference electrode being capable, at least in its immediate vicinity, of maintaining constant the chemical potential of the halogen of the electrolyte, characterized in that the electrolyte is doped by a peroxide which provides the reactive species of the working electrode (4).

2. Device according to claim 1, characterized in that the halide is a fluoride composite of lead and tin.

3. Device according to claim 2, characterized in that the peroxide is present in the electrolyte (2) to a value of 0.2 to 3% expressed as an atomic percentage with respect to the fluoride.

4. Device according to claim 2, characterized in that the peroxide is present in the electrolyte (2) to a value of 0.5% expressed as an atomic percentage with respect to the fluoride.

5. Device according to claim 1, characterized in that the reference electrode (10) is comprised, at least in part by a mixture of a metal and its halide corresponding to that of the electrolyte (2), the metal being chosen from tin, lead, bismuth and silver.

6. Device according to claim 1, characterized in that the working electrode (4) comprises an electronically conductive oxide, in particular the oxide of ruthenium.

7. Device according to claim 4, characterized in that the electrolyte (2), the reference electrode (10) and the working electrode (4) are in the form of plates which are pressed together to form a single plate.

*Fig:1*

Fig.2